# EUROPÄISCHE PATENTSCHRIFT

(11) **EP 1 671 529 B1**
(45) Veröffentlichungstag und Bekanntmachung des Hinweises auf die Patenterteilung: **26.04.2017**
(21) Anmeldenummer: 05021487.3
(22) Anmeldetag: 30.09.2005
(51) Int. Cl.: A01D 41/12, G08C 17/04

(54) **Mähdrescher**
Combine harvester
Moisonneuse-batteuse

(30) Priorität: 17.12.2004 DE 102004061439
(43) Veröffentlichungstag der Anmeldung: 21.06.2006
(73) Patentinhaber: CLAAS Selbstfahrende Erntemaschinen GmbH, 33428 Harsewinkel (DE)
(72) Erfinder: Dammann, Ludwig, 33428 Harsewinkel (DE)

(56) Entgegenhaltungen:
- EP-A- 0 011 991
- EP-A- 0 835 603
- DE-A1- 10 335 112
- DE-A1- 19 618 033

## Beschreibung

Die Erfindung betrifft ein Datengenerierungs- und -übertragungssystem in landwirtschaftlichen Arbeitsmaschinen nach dem Oberbegriff des Anspruchs 1.

Aus der DE 196 18 033 ist eine als Mähdrescher ausgeführte landwirtschaftliche Arbeitsmaschine bekannt geworden, der ein Fernbedienungssystem zum Schalten, Betätigen und Steuern von Arbeitsorganen und Stellgliedern zugeordnet ist. Damit eine unkomplizierte Signalübertragung zwischen den verschiedenen Elementen der Schalt- und Steuereinrichtung möglich wird wurde auf eine leitungsbasierte Signalübertragung verzichtet und an deren Stelle die drahtlose Datenübertragung gewählt. Damit nun die übertragenen Signale an den verschiedensten Stellgliedern auch Steuer- und Regelvorgänge auslösen können, wird vorgeschlagen, die Energieversorgung des Datenaustauschsystems durch zentrale oder dezentrale Energiespeicher, wie etwa Batterien, sicherzustellen. Derartigen Ausführungen haftet deshalb insbesondere der Nachteil an, dass einerseits eine Vielzahl von kleineren Batterieeinheiten unmittelbar den jeweiligen Sensorelementen zugeordnet werden müssen, sodass hier konstruktiv aufwendige und teure Datenaustauschsysteme entstehen. Andererseits birgt die Zuordnung einer zentralen Energiequelle den Nachteil, dass lange Übertragungswege hohe Übertragungsleistungen erfordern, die häufig nicht über die in einer landwirtschaftlichen Arbeitsmaschine zu überwinden Distanzen sinnvoll übertragen werden können.

Demgegenüber sind Systeme mit leitungsbasierter Datenübertragung, wie etwa die DE 41 33 976 offenbart, weit verbreitet. Derartige Datenaustauschsysteme weisen eine hohe Funktionssicherheit auf, sodass ein auf das Datenübertragungssystem bezogene Informationsverlust wegen der einfach realisierbaren Übertragung elektrischer Energie nahezu vernachlässigbar ist. Wegen des Gebundenseins an Leitungssysteme weist diese Art der Datenübertragung jedoch verschiedene Nachteile auf. Zunächst benötigen die Leitungsnetze Bauraum, der um so größer ist, je mehr Elemente in das Datenaustauschsystem eingebunden sind. Andererseits weisen landwirtschaftliche Arbeitsmaschinen eine Vielzahl bewegter Arbeitsorgane auf, sodass die den Datenaustausch sicherstellenden Leitungen dann einem hohen Verschleiß ausgesetzt sind, wenn die Sensorelemente unmittelbar an bewegten Bauteilen angeordnet sind. Um diesem Verschleiß entgegenzuwirken, verfügen die Leitungssysteme über aufwendig gestaltete und häufig sehr kostenintensive Verbindungselemente zu den bewegten Sensoren, deren Elastizität die Bruchgefahr reduziert.

Eine weitere landwirtschaftliche Arbeitsmaschine mit den Merkmalen des Oberbegriffs des Anspruchs 1 ist aus der DE 196 18 033 A1 bekannt. Es ist deshalb Aufgabe der Erfindung ein Datengenerierungs- und -übertragungssystem in landwirtschaftlichen Arbeitsmaschinen vorzuschlagen, welches die beschriebenen Nachteile des Standes der Technik vermeidet und insbesondere eine hohe Flexibilität in der Anpassung an geometrische Gegebenheiten aufweist und weitgehend unabhängig von separaten Energiespeichern ist.

Diese Aufgabe wird erfindungsgemäß durch die kennzeichnenden Merkmale des Anspruchs 1 gelöst.

Indem zumindest ein Teil der Datengenerierungs- und -übertragungselemente einen leitungslosen Datenaustausch realisiert und die Energie zum Generieren der Daten und/oder zur Datenübertragung in dem Datengenerierungs- und -übertragungssystem erzeugt und/oder von diesem übertragen wird, ist sichergestellt, dass die Datenübertragung flexibel an geometrische Gegebenheiten angepasst werden kann und weitgehend unabhängig von separaten Energiequellen arbeitet.

Eine kostengünstige und eine hohe Funktionssicherheit aufweisende Struktur des erfindungsgemäßen Datengenerierungs- und -übertragungssystems ergibt sich dann, wenn den Arbeitsorganen und/oder den Stellgliedern der landwirtschaftlichen Arbeitsmaschine die informationsbeschaffenden Sensoren zugeordnet sind, die über sogenannte Transponder die Kommunikation der Sensoren mit zumindest einem gestellfesten Transceiver ermöglichen. Auf diese Weise wird sichergestellt, dass nur die zur Generierung der jeweiligen Datensignale unbedingt erforderlichen Einrichtungen auf den bewegten Arbeitsorganen oder Stellgliedern angeordnet sind, wodurch der unmittelbar an den bewegten Arbeitsorganen und Stellgliedern zur Datengenerierung oder zur Realisierung eins Stellvorganges erforderliche Energiebedarf beschränkt wird.

In vorteilhafter Weiterbildung der Erfindung sind der oder die Sensoren sowie die ihnen zugeordneten Transponder und der zumindest eine gestellfeste Transceiver so gestaltet, dass die von den Sensoren generierten Signale ohne Datenverlust an den jeweiligen Transceiver übergeben werden und umgekehrt von dem Transceiver an die Sensoren zu übergebende Daten verlustfrei übergebbar sind.

Eine kostengünstige und zudem den erforderlichen Bauraum weiter reduzierende Ausgestaltung der Erfindung ergibt sich erfindungsgemäss dadurch, dass jedem Sensor unmittelbar ein Transponder zugeordnet ist und mehrere Sensor - Transponder - Anordnungen mit ein und dem selben Transceiver kommunizieren.

Um die Störanfälligkeit des Datengenerierungs- und -übertragungssystems gering zu halten, sind in vorteilhafter Ausgestaltung der Erfindung der Sensor und der ihm zugeordnete Transponder in einer Sensoreinheit zusammengefasst.

In vorteilhafter Weiterbildung der Erfindung können eine Vielzahl von Sensoren und die ihnen zugeordneten Transponder zu Gruppen von Datengenerierungs- und -übertragungselementen zusammengefasst sein, wobei jede Gruppe mit einem separaten Transceiver kommuniziert. Dies hat einerseits den Vorteil, dass die Datenübertragung auf Distanzen beschränkt werden kann, die keinen Informationsverlust nach sich ziehen. Zudem wird so sichergestellt, dass der Energiebedarf innerhalb dieser Gruppen von Datengenerierungs- und -übertragungselementen gering bleibt. Indem der oder die Transceiver mit zumindest einer Steuer- und Auswerteinheit und/oder einem Bussystem der landwirtschaftlichen Arbeitsmaschine kommunizieren, wird außerdem ein sicherer und schneller Datenaustausch mit den weiteren Kommunikationseinrichtungen der landwirtschaftlichen Arbeitsmaschine gewährleistet.

Nach einer Ausführungsform der Erfindung kann die zum Betreiben des erfindungsgemäßen Datengenerierungs- und -übertragungssystems erforderliche Energie auch mittels externen Magnetfelder generiert werden.

Ein niedriger Energieverlust und damit die Vermeidung von Störungen in dem Datengenerierungs- und -übertragungssystem wird dann möglich, wenn die Sensor - Transponder - Anordnung (und/oder der Transceiver) beweglich angeordnet und in die Sensor - Transponder - Anordnung (und/oder den Transceiver) die Pendel - Induktionsspulen - Anordnung zur Energieerzeugung integriert ist.

In vorteilhafter Ausgestaltung der Erfindung sind der oder die Transceiver ortsfest an dem Maschinengestell der landwirtschaftlichen Arbeitsmaschine angeordnet, während ein oder mehrere Sensor - Transponder - Anordnungen unmittelbar an den bewegten Arbeitsorganen und/oder Stellgliedern der landwirtschaftlichen Arbeitsmaschine fixiert sind. Die hat den Vorteil, dass die bewegten Massen des Datengenerierungs- und -übertragungssystem sowie die zu übertragenden Energien gering sind.

Eine hohe Flexibilität bezüglich der durch das Datengenerierungs- und -übertragungssystem austauschbaren Informationen wird dann erreicht, wenn die Sensoren sowohl Messsignale als auch Stellsignale generieren können.

Indem die landwirtschaftliche Arbeitsmaschine als Mähdrescher ausgeführt ist und die Sensoren als an sich bekannte Kornsensoren ausgebildet sind und dem Hordenschüttler und/oder der Reinigungseinrichtung eines Mähdreschers zugeordnet sind, wird ein Datengenerierungs- und -übertragungssystem für einen Mähdrescher bereitgestellt, welches eine komfortable Datengenerierung in schwer zugänglichen und zudem im Betrieb bewegten Bereichen zulässt. Gleiches gilt, wenn die Sensoren als Betätigungselemente für die Verstelleinrichtung der Siebe der Reinigungseinrichtung ausgebildet sind.

In vorteilhafter Weiterbildung der Erfindung können einem oder mehreren Arbeitsorganen der landwirtschaftlichen Arbeitsmaschine eine Vielzahl von Sensoren, wie etwa an sich bekannte Sensoren zur Ermittlung von Windgeschwindigkeiten, Erntegutfeuchten und Temperaturen, Lagesensoren, Kornmengensensoren sowie Drehzahl- und Drehmomentsensoren zugeordnet sein, sodass die Datengenerierung und Übertragung innerhalb einer landwirtschaftlichen Arbeitsmaschine weitgehend unabhängig von leitungsbasierten Datenübertragungssystemen und separaten Energiequellen wird.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine als Mähdrescher ausgeführte landwirtschaftliche Arbeitsmaschine in der Seitenansicht
- Figur 2: eine Detailansicht des Mähdreschers nach Figur 1
- Figur 3: eine schematische Darstellung des erfindungsgemäßen Datengenerierungs- und -übertragungssystems
- Figur 4: eine Detailansicht eines erfindungsgemäßen Sensors

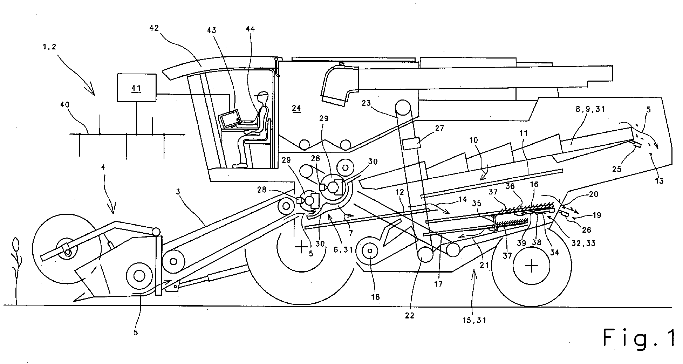

In Fig. 1 ist eine als Mähdrescher 2 ausgeführte landwirtschaftliche Arbeitsmaschine 1 dargestellt, deren frontseitigem Schrägförderer 3 ein Mähwerk 4 zugeordnet ist. In an sich bekannter Weise übergibt der Schrägförderer 3 den von dem Mähwerk 4 geernteten Erntegutstrom 5 in seinem rückwärtigen Bereich Dreschorganen 6 an welchen ein erster, im Wesentlichen aus Körnern, unausgedroschenen Ähren, Kurzstroh und Spreu bestehender Erntegutteilstrom 7 abgeschiedenen wird. Im rückwärtigen Bereich der Dreschorgane 6 gelangt der verbleibende Erntegutstrom 5 auf eine als Hordenschüttler 8 ausgeführte Trenneinrichtung 9 in deren untenseitigem Bereich ein weiterer, im Wesentlichen ebenfalls aus Körnern, unausgedroschenen Ähren, Kurzstroh und Spreu bestehender Erntegutteilstrom 10 abgeschieden wird. Während der am Hordenschüttler 8 abgeschiedene Erntegutteilstrom 10 über einen Rücklaufboden 11 dem sogenannten Vorbereitungsboden 12 zugeführt wird gelangt der an den Dreschorganen 6 abgeschiedene erste Erntegutteilstrom 7 unmittelbar auf den Vorbereitungsboden 12. Im rückwärtigen Bereich des Hordenschüttlers 8 wird der nunmehr im Wesentlichen aus Stroh und einem geringen Restkornanteil, den Abscheideverlusten 13, bestehende Erntegutstrom 5 aus dem Mähdrescher 2 herausgefördert.

Die auf den Vorbereitungsboden 12 gelangten Erntegutteilströme 7, 10 werden als gemeinsamer Erntegutstrom 14 der dem Vorbereitungsboden 12 nachgeordneten Reinigungseinrichtung 15 übergeben. In an sich bekannter Weise wird die Reinigungseinrichtung 15 von in vertikaler Richtung stufig zueinander angeordneten Reinigungssieben, dem Obersieb 16 sowie dem Untersieb 17, und zumindest einem einen Luftstrom durch die Siebanordnungen 16, 17 fördernden Reinigungsgebläse 18 gebildet. Die in der Regel schwingend bewegte, luftdurchströmde Siebanordnung 16, 17 trennt den über den Vorbereitungsboden 12 an sie übergebenen Erntegutstrom 14 im Wesentlichen in Korn- und Nichtkornbestandteile. Dabei wird im rückwärtigen Bereich der Reinigungseinrichtung 15 ein überwiegend aus Kurzstroh und Spreu sowie einem geringen Anteil Körnern, den sogenannten Reinigungsverlusten 19, bestehender Gutstrom 20 aus dem Mähdrescher 2 herausgefördert.

Ein weiterer durch die Siebanordnungen 16, 17 hindurchgetretener, im Wesentlichen aus Körnern und zu einem geringen Anteil aus Beimengungen bestehender Körnerstrom 21 wird in an sich bekannter Weise mittels einer Förderschneckenanordnung 22 und einem Körnerelevator 23 einem Korntank 24 zur Speicherung des Körnerstroms 21 zugeführt.

Zur Ermittlung der Kornverlustströme 13, 19 sind der als Hordenschüttler 8 ausgeführten Trenneinrichtung 9 und der Reinigungseinrichtung 15 jeweils im rückwärtigen Bereich an sich bekannte Kornverlustsensoren 25, 26 in noch näher zu beschreibender Weise zugeordnet. Zudem nimmt der den Körnerstrom 21 in den Korntank 24 fördernde Körnerelevator 23 einen sogenannten Kornmengensensoren 27 zur Ermittlung der geernteten Kornmenge 21 auf. Zudem sei an dieser Stelle darauf verwiesen, dass dem Mähdrescher 2 eine Vielzahl weiterer Sensoren, wie etwa Sensoren 28 zur Ermittlung der Drehzahl der die Dreschorgane 6 bildenden Dreschtrommeln 29 oder Sensoren 30 zur Ermittlung eines dem Gutstromdurchsatz 5 entsprechenden Drehmoments an den Dreschtrommeln 29 zugeordnet sein können.

In dem dargestellten Ausführungsbeispiel bilden die Dreschorgane 6, die Trenneinrichtung 9 sowie die Reinigungseinrichtung 15 zugleich die Arbeitsorgane 31 des Mähdreschers 2. Daneben verfügt der Mähdrescher 2 über ein Vielzahl von Stellgliedern 32, wobei im Zusammenhang mit der Erfindung nur der Verstellantrieb 33 für die Siebanordnung 16, 17 der Reinigungseinrichtung 15 beschrieben wird. In an sich bekannter Weise wird der Verstellantrieb 33 der Reinigungseinrichtung 15 von zumindest einem elektrisch betriebenen Verstellmotor 34 angetrieben, der über mechanische Koppelglieder 35 eine Verstellung der Öffnungsweite 36 der Sieblamellen 37 der Siebanordnung 16, 17 bewirkt, wobei an sich bekannte Lagesensoren 38 die Position des Verstellantriebs 33 überwachen. Dabei kann als Maß für die einzustellende Sieböffnungsweite 36 entweder unmittelbar die Stellung der Sieblammellen 37, die Stellung der Spindel 39 des Linearmotors 34 und/oder die Position eines oder mehrerer Koppelglieder 35 des Verstellantriebs 33 durch die Lagesensoren 38 sensiert werden.

Weiter verfügt die als Mähdrescher 2 ausgeführte landwirtschaftliche Arbeitsmaschine 1 über ein, in Fig. 1 schematisch angedeutetes und noch näher zu beschreibendes Bussystem 40, in welches neben den beschriebenen Sensoren 25 - 28, 30, 38 eine Steuer- und Regeleinheit 41 eingebunden sein kann, die über eine in der Fahrerkabine 42 des Mähdreschers 2 angeordnete Anzeige- und Eingabeeinheit 43 von dem Betreiber 44 editierbar ist und diesem andererseits Informationen zur Anzeige bringt.

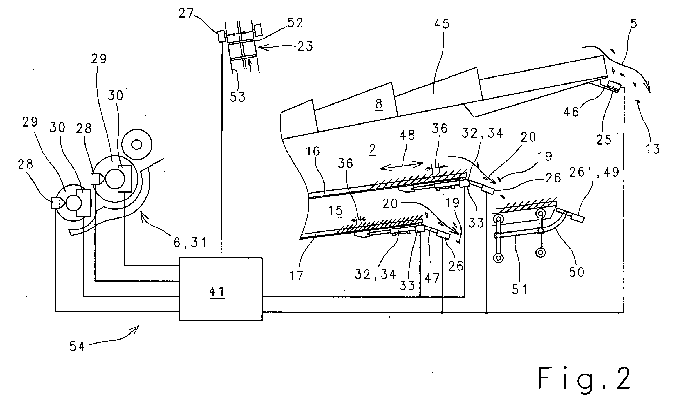

Fig. 2 zeigt für die beispielhaft beschriebenen Sensoren 25-28, 30, 38 deren Anbringung an den verschiedenen Arbeitsorganen 31 oder Stellgliedern 32. Die den Abscheideverlust 13 sensierenden Kornsverlustsensoren 25 sind jeweils mit den einzelnen Horden 45 des Hordenschüttlers 8 über Haltebügel 46 lösbar verbunden. Wegen der zueinander versetzten Bewegung der einzelnen Horden 45 ist es zweckmäßig, jeder Schüttlerhorde 45 einen separaten Kornverlustsensor 25 zuzuordnen, wobei zur Verbesserung der Messgenauigkeit jeder Schüttlerhorde auch mehrere Kornverlustsensoren 25 zugeordnet sein können. In analoger Weise sind in dem dargestellten Ausführungsbeispiel in einer ersten Ausführungsform dem Obersieb 16 und dem Untersieb 17 der Reinigungseinrichtung 15 separate Kornverlustsensoren 26 zur Ermittlung der Reinigungsverluste 19 zugeordnete. Die Kornverlustsensoren 26 sind ebenfalls über Haltebügel 47 an dem jeweiligen Sieb 16, 17 befestigt und führen somit ebenfalls die Schwingbewegung 48 des jeweiligen Reinigungssiebes 16, 17 aus. Zur Verbesserung der Sensiergenauigkeit können jedem Reinigungssieb 16,17 eine Vielzahl von Kornverlustsensoren 26 über die Breite der Reinigungssiebe 16, 17 zugeordnet sein. In einer zweiten Ausführungsform kann der Reinigungseinrichtung 15 eine einzige Kornverlustsensoranordnung 49 zugeordnet sein, die eine Vielzahl von Kornverlustsensoren 26' aufnimmt und entweder über eine Adaptiervorrichtung 50 mit einem Schwingrahmen 51 der Siebanordnung 16, 17 gekoppelt ist und somit die Schwingbewegung 48 der Reinigungssiebe 16, 17 nachvollzieht oder unmittelbar gestellfest im Mähdrescher 2 fixiert ist. Da die Sieböffnungsweite 36 in der Regel für das Obersieb 16 und das Untersieb 17 unabhängig voneinander einstellbar ist, ist an jedem Reinigungssieb 16, 17 ein separater Verstellantrieb 33 zur Veränderung der Sieböffnungsweite 36 befestigt.

In dem dargestellten Ausführungsbeispiel verfügt der Körnerelevator 23 zudem über einen an sich bekannten Kornmengensensor 27, der entweder mit dem kornaufnehmenden Paddel 52 des Körnerelevators 23 mitbewegt wird oder in einem Verkleidungsbereich 53 des Körnerelevators 23 ortsfest angeordnet ist.

Wie bereits angedeutet sind den Dreschtrommeln 29 des Dreschorgans 6 an sich bekannte Drehzahlsensoren 28 sowie Drehmomentsensoren 30 zugeordnet. Zur Realisierung des erfindungsgemäßen, nachfolgend beschriebenen Datengenerierungs- und Übertragungssystems 54 können die Drehzahlsensoren 28 sowie die Drehmomentsensoren 30 entweder drehfest mit den umlaufenden Dreschtrommeln 29 oder gestellfest mit dem Mähdrescher 2 verbunden sein.

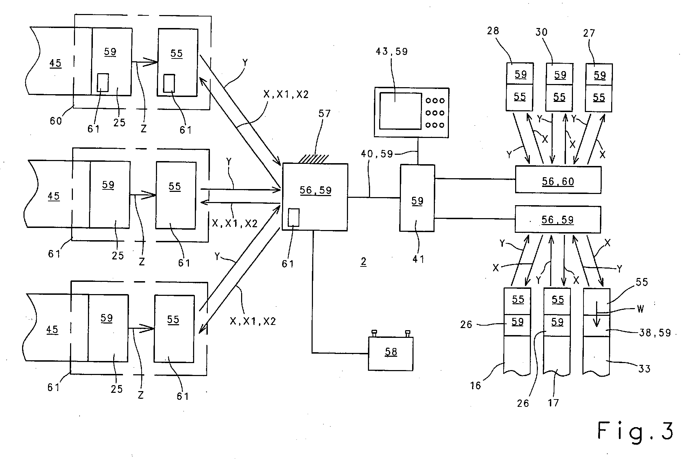

In Fig.3 wird nun schematisch das erfindungsgemäße Datengenerierungs- und - übertragungssystem 54 am Beispiel der Kornverlustsensoren 25 des Hordenschüttlers 8 näher erläutert. Jeder Schüttlerhorde 45 sind ein oder mehrere Kornverslustsensoren 25 zugeordnet, die in an sich bekannter Weise als sogenannte Klopfsensoren ausgebildet sind und in Abhängigkeit von der Intensität des Kontaktes mit den Abscheideverlust 13 repräsentierenden Körner ein kornverlustproportionales Spannungssignal Z generieren. Das Spannungssignal Z wird an einen sogenannten Transponder 55 übergeben, der in der Regel das Spannungssignal Z in ein weiterverarbeitbares Datenformat kompiliert und schließlich als Informationssignal Y in erfindungsgemäßer Weise drahtlos an einen Transceiver 56 übermittelt. Während die Kornverlustsensoren 25 und die ihnen zugeordneten Transponder 55 mit der jeweiligen Schüttlerhorde 45 verbunden sind, ist der Transceiver 56 gestellfest, beispielsweise mit dem Rahmen 57 des Mähdreschers 2 verbunden. Der Transceiver 56 ist so ausgeführt, dass er einerseits die empfangenen Informationssignale Y über beispielsweise ein in den Mähdrescher 2 integriertes Bussystem 40 an eine Steuer- und Regeleinheit 41 übergibt, die ihrerseits über das Bussystem 40 mit der bereits beschriebenen Anzeige- und Eingabeeinheit 43 kommuniziert. Zum anderen kann der Transceiver 56 seinerseits Steuersignale X an die Transponder 55 der verschiedenen Kornverlustsensoren 25 drahtlos übermitteln. Dabei können die Steuersignale X Informationen X1 für die Transponder 55 und die ihnen zugeordneten Kornsensoren 25, wie etwa Eichinformation, sowie Energieanteile X2, die zum Betreiben der Kornverlustsensoren 25 und der Transponder 55 erforderlich sind umfassen. Im einfachsten Fall können die von dem Transceiver 56 übertragenen Energieanteil X2 aus einer dem Mähdrescher zugeordneten Energiequelle 58 bezogen werden.

Indem zumindest die Datenübertragung zwischen den Transpondern 55 der Kornverlustsensoren 25 und dem Transceiver 56 drahtlos erfolgt und der Transceiver 56 zugleich die zum Betreiben der Kornverlustsensoren 25 und der ihnen zugeordneten Transponder 55 notwendige Energie X2 an diese übermittelt, wird ein Datengenerierungs- und -übertragungssystem 54 geschaffen, bei dem die Datenübertragung flexibel an geometrische Gegebenheiten anpassbar ist und welches unabhängig von separaten, den einzelnen Kornverlustsensoren 25 oder Transpondern 55 unmittelbar zugeordneten Energiequellen arbeitet.

In analoger Weise können die Kornverlustsensoren 26 der Reinigungseineinrichtung 15 und der oder die Lagesensoren 38 der den Reinigungssieben 16, 17 zugeordneten Verstellantriebe 33 über Transponder 55 mit dem gleichen oder einem separaten Transceiver 56 drahtlos in der bereits beschriebenen Weise kommunizieren, wobei der weitere Transceiver 56 ebenfalls in das Bussystem 40 des Mähdreschers 2 integriert ist. Sofern es den Verstellantrieb 33 betrifft, generiert der Transponder 55 schließlich ein Stellsignal W, welches die bereits beschriebene Verstellung der Sieböffnungsweite 36 der Siebanordnung 16,1 7 bewirkt. Zudem sind der Körnerstromsensor 27 sowie die Drehzahl- und Drehmomentsensoren 28, 30 über weitere Transponder 55 mit einem bereits vorhandenen oder, wie dargestellt, über einen separaten Transceiver 56 in das Bussystem 40 des Mähdreschers 2 eingebunden.

In dem dargestellten Ausführungsbeispiel bilden zumindest die verschiedenen Sensoren 25-28, 30, 38 sowie die Transceiver 56 die erfindungsgemäß leitungslos Daten austauschenden Datengenerierungs- und -übertragungselemente 59.

Zur Realisierung einer weniger störanfälligen Bauweise können die jeweiligen Sensoren 25-28, 30, 38 und die ihnen zugeordneten Transponder 55 in einem Bauteil zu einer Sensoreinheit 60 zusammengefasst sein.

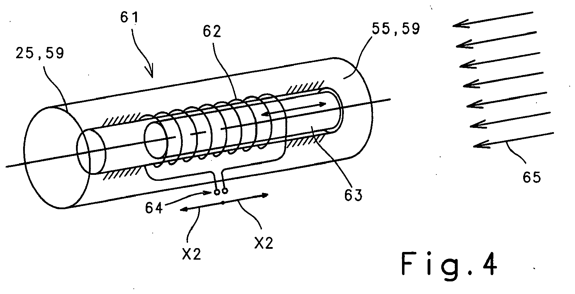

Sofern die verschiedenen Sensoren 25-28, 30, 38, die ihnen zugeordneten Transponder 55 sowie der oder die Transceiver während ihrer Kommunikation in Bewegung sind, können diesen Datengenerierungs- und -übertragungselementen 59 auch noch näher zu beschreibende, aus der jeweiligen Bewegungsenergie die zum Betreiben der verschiedenen Datengenerierungs- und -übertragungselemente 59 notwendige Energie X2 generierende Energiequellen 61 zugeordnet sein. Aus Übersichtlichkeitsgründen ist diese Ausführungsform in Fig. 3 nur für eine Sensor - Transponder - Transceiver - Anordnung 25, 55, 56 dargestellt. Fig 4 zeigt die Energiequelle 61 im Detail. Der im Betrieb bewegten Sensoreinheit 61 ist innenseitig eine aus einer beliebigen Anzahl von Wicklungen bestehende Induktionsspule 62 zugeordnet, welche beispielsweise von einem gleitend gelagerten Dauermagneten 63 durchsetzt wird, der durch die Bewegung der Sensoreinheit 61 innerhalb der Induktionsspule 62 gleitet, sodass in der Induktionsspule 62 in bekannter Weise eine Spannung induziert wird. Einenends sind der Induktionsspule 62 Kontakte 64 zugeordnet über die die induzierte Spannung abgegriffen und nach einer Transformation dem jeweiligen Sensor 25-28, 30, 38 und dem diesen zugeordneten Transponder 55 als Energie X2 zugeführt wird. Es liegt im Rahmen der Erfindung, dass an Stelle des gleitenden in der Sensoreinheit 61 angeordneten Dauermagneten 63 die Sensoreinheit 61 selbst innerhalb eines von außen erzeugten Magnetfeldes 65 bewegt werden kann, sodass sich der konstruktive Aufbau der Sensoreinheit 61 erheblich vereinfacht.

Es liegt im Rahmen des Könnens eines Fachmanns das beschriebene Datengenerierungs- und -übertragungssystem 54 in nicht dargestellter Weise abzuwandeln oder in anderen als den dargestellten Anwendungsfällen einzusetzen, um die beschriebenen Effekte zu erzielen, im Rahmen der beigefügten Ansprüche.

**Bezugszeichenliste:**

| | | | |
|---|---|---|---|
| 1 | landwirtschaftliche Arbeitsmaschine | 31 | Arbeitsorgan |
| 2 | Mähdrescher | 32 | Stellglied |
| 3 | Schrägförderer | 33 | Verstellantrieb |
| 4 | Mähwerk | 34 | Linearmotor |
| 5 | Erntegutstrom | 35 | Koppelglieder |
| 6 | Dreschorgan | 36 | Sieböffnungsweite |
| 7 | Erntegutteilstrom | 37 | Sieblamellen |
| 8 | Hordenschüttler | 38 | Lagesensor |
| 9 | Trenneinrichtung | 39 | Spindel |
| 10 | Erntegutteilstrom | 40 | Bussystem |
| 11 | Rücklaufboden | 41 | Steuer- und Regeleinheit |
| 12 | Vorbereitungsboden | 42 | Fahrerkabine |
| 13 | Abscheideverlust | 43 | Anzeige- und Eingabeeinheit |
| 14 | Erntegutstrom | 44 | Betreiber |
| 15 | Reinigungseinrichtung | 45 | Schüttlerhorde |
| 16 | Obersieb | 46 | Haltebügel |
| 17 | Untersieb | 47 | Haltebügel |
| 18 | Reinigungsgebläse | 48 | Schwingbewegung |
| 19 | Reinigungsverlust | 49 | Kornverlustsensoranordnung |
| 20 | Gutstrom | 50 | Adaptiervorrichtung |
| 21 | Körnerstrom | 51 | Schwingrahmen |
| 22 | Förderschneckenanordnung | 52 | Paddel |
| 23 | Körnerelevator | 53 | Verkleidungsbereich |
| 24 | Korntank | 54 | Datengenerierungs- und -übertragungssystem |
| 25 | Kornverlustsensor | 55 | Transponder |
| 26 | Kornverlustsensor | 56 | Transceiver |
| 27 | Kornmengensensor | 57 | Rahmen |
| 28 | Drehzahlsensor | 58 | Energiequelle |
| 29 | Dreschtrommel | 59 | Datengenerierungs- und -übertragungselement |
| 30 | Drehmomentsensor | 60 | Sensoreinheit |
| 61 | Energiequelle | | |
| 62 | Induktionsspule | | |
| 63 | Dauermagnet | | |
| 64 | Kontakte | | |
| 65 | externes Magnetfeld | | |
| | | | |
| W | Stellsignal | | |
| X | Steuersignal | | |
| X1 | Informationssignal | | |
| X2 | Energieanteil | | |
| Y | Informationssignal | | |
| Z | Spannungssignal | | |

## Patentansprüche

1. Landwirtschaftlichen Arbeitsmaschine (1) mit einem Datengenerierungs- und - übertragungssystem (54) zum Datenaustausch zwischen bewegten und/oder ortsfesten Arbeitsorganen (31) und Stellgliedern (32) und wobei zumindest einem Teil der bewegten und/oder ortsfesten Arbeitsorgane (31) und Stellglieder (32) Datengenerierungs- und -übertragungselemente (59) zugeordnet sind, wobei zumindest ein Teil der Datengenerierungs- und-übertragungselemente (59) einen leitungslosen Datenaustausch realisiert und die Energie (X2) zum Generieren der Daten (X, Y, Z) und/oder zur Datenübertragung in dem Datengenerierungs- und -übertragungssystem (54) erzeugt und/oder von diesem übertragen wird,
**dadurch gekennzeichnet,**
**dass** den Arbeitsorganen (31) und/oder den Stellgliedern (32) Sensoren (25-28, 30, 38) zugeordnet sind die über Transponder (55) einen Datenaustausch mit zumindest einem gestellfesten Transceiver (56) betreiben, wobei jedem Sensor (25-28, 30, 38) ein Transponder (55) zugeordnet ist und eine Vielzahl von Transpondern (55) mit dem gleichen Transceiver (56) kommunizieren, und wobei die Energie (X2) zum Betreiben der Sensor - Transponder - Anordnung (25-28, 30, 38, 55) und/oder des Transceivers (56) mittels externer Magnetfelder (65) generiert wird, oder eine Pendel - Induktionsspulen - Anordnung (62, 63) zur Energieerzeugung (X2) in dem Sensor (25-28, 30, 38) und/oder in dem Transponder (55) angeordnet ist.

2. Landwirtschaftlichen Arbeitsmaschine mit einem Datengenerierungs- und - übertragungssystem nach einem der vorhergehenden Ansprüche,
**dadurch gekennzeichnet,**
**dass** die Sensoren (25-28, 30, 38) Spannungssignale (Z) an den jeweiligen Transponder (55) übermitteln, der die Spannungssignale (Z) weiterverarbeitet und als Informationssignale (Y) an zumindest einen Transceiver (56) übermittelt und der Transceiver (56) die Informationssignale (Y) an nachgeordnete Datengenerierungs- und -übertragungselemente (40, 41, 43) und Steuersignale (X) an die Sensoren (25-28, 30, 38) und die Transponder (55) übermittelt.

3. Landwirtschaftlichen Arbeitsmaschine (1) mit einem Datengenerierungs- und - übertragungssystem nach Anspruch 1,
**dadurch gekennzeichnet,**
**dass** der Sensor (25-28, 30, 38) und der ihm zugeordnete Transponder (55) zu einer Sensoreinheit (60) zusammengefasst sind.

4. Landwirtschaftlichen Arbeitsmaschine mit einem Datengenerierungs- und - übertragungssystem nach einem der vorhergehenden Ansprüche,
**dadurch gekennzeichnet,**
**dass** eine Vielzahl von Sensoren (25-28, 30, 38) und die ihnen zugeordneten Transponder (55) zu Gruppen von Datengenerierungs- und -übertragungselementen (59) zusammengefasst sind und jede Gruppe mit einem separaten Transceiver (56) kommuniziert.

5. Landwirtschaftlichen Arbeitsmaschine mit einem Datengenerierungs- und - übertragungssystem nach einem der vorhergehenden Ansprüche,
**dadurch gekennzeichnet,**
**dass** der oder die Transceiver (56) mit zumindest einer Steuer- und Auswerteinheit (41) und/oder einem Bussystem (40) der landwirtschaftlichen Arbeitsmaschine (1, 2) kommunizieren.

6. Landwirtschaftlichen Arbeitsmaschine mit einem Datengenerierungs- und - übertragungssystem nach einem der vorhergehenden Ansprüche,
**dadurch gekennzeichnet,**
**dass** die Sensor - Transponder - Anordnung (25-28, 30, 38, 55) beweglich angeordnet und in die Sensor - Transponder - Anordnung (25-28, 30, 38, 55) die Pendel-Induktionsspulen-Anordnung (62, 63) zur Energieerzeugung (X2) integriert ist.

7. Landwirtschaftlichen Arbeitsmaschine mit einem Datengenerierungs- und - übertragungssystem nach Anspruch 6,
**dadurch gekennzeichnet,**
**dass** das Pendel der Pendel - Induktionsspulen - Anordnung (62, 63) als in der Induktionsspule (62) gleitend gelagerter Dauermagnet (63) ausgeführt ist.

8. Landwirtschaftlichen Arbeitsmaschine mit einem Datengenerierungs- und - übertragungssystem nach einem der vorhergehenden Ansprüche,
**dadurch gekennzeichnet,**
**dass** der oder die Transceiver (56) ortsfest an dem Maschinengestell (57) der landwirtschaftlichen Arbeitsmaschine (1, 2) angeordnet sind und ein oder mehrere Sensor - Transponder - Anordnungen (25-28, 30, 38, 55) bewegten Arbeitsorganen (31) und/oder Stellgliedern (32) der landwirtschaftlichen Arbeitsmaschine (1, 2) zugeordnet sind.

9. Landwirtschaftlichen Arbeitsmaschine mit einem Datengenerierungs- und - übertragungssystem nach einem der vorhergehenden Ansprüche,
**dadurch gekennzeichnet,**
**dass** die Sensoren (25-28, 30, 38) zur Generierung von Messsignalen (Z) und/oder Stellsignalen (W) ausgebildet sind.

10. Landwirtschaftlichen Arbeitsmaschine mit einem Datengenerierungs- und - übertragungssystem nach einem der vorhergehenden Ansprüche,
**dadurch gekennzeichnet,**
**dass** die landwirtschaftliche Arbeitsmaschine (1) als Mähdrescher (2) ausgeführt ist und die Sensoren (25, 26) als an sich bekannte Kornverlustsensoren (25, 26) ausgebildet sind und dem Hordenschüttler (8) und/oder der Reinigungseinrichtung (15) eines Mähdreschers (2) zugeordnet sind.

11. Landwirtschaftlichen Arbeitsmaschine mit einem Datengenerierungs- und - übertragungssystem nach einem der vorhergehenden Ansprüche,
**dadurch gekennzeichnet,**
**dass** die landwirtschaftliche Arbeitsmaschine (1) als Mähdrescher (2) ausgeführt ist und die Sensoren (25, 26) als an sich bekannte Windgeschwindigkeitssensoren, Feuchtesensoren und/oder Temperatursensoren ausgebildet sind und wobei die Sensoren (25, 26) zumindest einem Arbeitsorgan (31) zugeordnet sind.

12. Landwirtschaftlichen Arbeitsmaschine mit einem Datengenerierungs- und - übertragungssystem nach einem der vorhergehenden Ansprüche,
**dadurch gekennzeichnet,**
**dass** die Sensoren (38) als Lagesensor (38) für den Verstellantrieb (33) der Siebe (16, 17) der Reinigungseinrichtung (15) eines Mähdreschers (2) ausgebildet sind.

13. Landwirtschaftlichen Arbeitsmaschine mit einem Datengenerierungs- und - übertragungssystem nach einem der vorhergehenden Ansprüche,
**dadurch gekennzeichnet,**
**dass** die Sensoren (27) als Kornmengensensoren (27) ausgebildet sind und in den Kornelevator (23) und/oder die Verkleidung (53) des Kornelevators (23) eines Mähdreschers (2) integriert sind.

14. Landwirtschaftlichen Arbeitsmaschine mit einem Datengenerierungs- und - übertragungssystem nach einem der vorhergehenden Ansprüche,
**dadurch gekennzeichnet,**
**dass** die Sensoren (28, 30) als Drehzahlsensoren (28) und/oder Drehmomentsensoren (30) ausgebildet und den Dreschorganen (6) eines Mähdreschers (2) zugeordnet sind.

## Claims

1. An agricultural working machine (1) having a data generation and transmission system (54) for data exchange between mobile and/or stationary working members (31) and actuating members (32), and wherein data generation and transmission elements (59) are associated with at least a part of the mobile and/or stationary working members (31) and actuating members (32), wherein at least a part of the data generation and transmission elements (59) involves wireless data exchange and the energy (X2) for generating the data (X, Y, Z) and/or for the data transmission is produced in the data generation and transmission system (54) and/or is transmitted thereby,
**characterised in that** associated with the working members (31) and/or the actuating members (32) are sensors (25-28, 30, 38) which by way of transponders (55) implement a data exchange with at least one transceiver (59) fixed with respect to the frame structure, wherein a transponder (55) is associated with each sensor (25-28, 30, 38) and a plurality of transponders (55) communicate with the same transceiver (56) and wherein the energy (X2) for operation of the sensor-transponder arrangement (25-28, 30, 38, 55) and/or the transceiver (56) is generated by means of external magnetic fields, or a pendulum-induction coil arrangement (62, 63) for energy production (X2) is arranged in the sensor (25-28, 30, 38) and/or in the transponder (55).

2. An agricultural working machine having a data generation and transmission system according to the preceding claim **characterised in that** the sensors (25-28, 30, 38) pass voltage signals (Z) to the respective transponder (55) which further processes the voltage signals (Z) and communicates same as information signals (Y) to at least one transceiver (56) and the transceiver (56) communicates the information signals (Y) to downstream data generation and transmission elements (40, 41, 43) and control signals (X) to the sensors (25-28, 30-38) and the transponders (55).

3. An agricultural working machine having a data generation and transmission system according to claim 1 **characterised in that** the sensor (25-28, 30, 38) and the transponder (55) associated therewith are combined to form a sensor unit (60).

4. An agricultural working machine having a data generation and transmission system according to one of the preceding claims **characterised in that** a plurality of sensors (25-28, 30, 38) and the transponders (55) associated therewith are combined to form groups of data generation and transmission elements (59) and each group communicates with a separate transceiver (56).

5. An agricultural working machine having a data generation and transmission system according to one of the preceding claims **characterised in that** the transceiver or transceivers (56) communicate with at least one control and evaluation unit (41) and/or a bus system (40) of the agricultural working machine (1, 2).

6. An agricultural working machine having a data generation and transmission system according to one of the preceding claims **characterised in that** the sensor-transponder arrangement (25-28, 30, 38, 55) is arranged moveably and the pendulum-induction coil arrangement (62, 63) for energy production (X2) is integrated into the sensor-transponder arrangement (25-28, 30, 38, 55).

7. An agricultural working machine having a data generation and transmission system according to claim 6 **characterised in that** the pendulum of the pendulum-induction coil arrangement (62, 63) is in the form of a permanent magnet (63) mounted slidably in the induction coil (62).

8. An agricultural working machine having a data generation and transmission system according to one of the preceding claims **characterised in that** the transceiver or transceivers (56) are arranged stationarily on the machine frame structure (57) of the agricultural working machine (1, 2) and one or more sensor-transponder arrangements (25-28, 30, 38, 55) are associated with mobile working members (31) and/or actuating members (32) of the agricultural working machine (1, 2).

9. An agricultural working machine having a data generation and transmission system according to one of the preceding claims **characterised in that** the sensors (25-28, 30, 38) are adapted to generate measurement signals (Z) and/or actuating signals (W).

10. An agricultural working machine having a data generation and transmission system according to one of the preceding claims **characterised in that** the agricultural working machine (1) is in the form of a combine harvester (2) and the sensors (25, 26) are in the form of per se known grain loss sensors (25, 26) and are associated with the straw walker (8) and/or the cleaning device (15) of a combine harvester (2).

11. An agricultural working machine having a data generation and transmission system according to one of the preceding claims **characterised in that** the agricultural working machine (1) is in the form of a combine harvester (2) and the sensors (25, 26) are in the form of per se known wind speed sensors, humidity sensors and/or temperature sensors and wherein the sensors (25, 26) are associated with at least one working member (31).

12. An agricultural working machine having a data generation and transmission system according to one of the preceding claims **characterised in that** the sensors (38) are in the form of position sensors (38) for the adjusting drive (33) of the sieves (16, 17) of the cleaning device (15) of a combine harvester (2).

13. An agricultural working machine having a data generation and transmission system according to one of the preceding claims **characterised in that** the sensors (27) are in the form of grain quantity sensors (27) and are integrated in the grain elevator (23) and/or the housing (53) of the grain elevator (23) of a combine harvester (2).

14. An agricultural working machine having a data generation and transmission system according to one of the preceding claims **characterised in that** the sensors (28, 30) are in the form of rotary speed sensors (28) and/or torque sensors (30) and are associated with the threshing members (6) of a combine harvester (2).

## Revendications

1. Engin agricole (1) comprenant un système de génération et de transmission de données (54) pour échanger des données entre des organes de travail mobiles et/ou fixes (31) et des éléments d'actionnement (32), et à au moins une partie des organes de travail mobiles et/ou fixes (31) et des éléments d'actionnement (32) étant associés des éléments de génération et de transmission de données (59), au moins une partie des éléments de génération et de transmission de données (59) réalisant un échange de données sans fil, et l'énergie (X2) pour générer les données (X, Y, Z) et/ou pour transmettre les données étant produite dans le système de génération et de transmission de données (54) et/ou transmise par celui-ci, **caractérisé en ce qu'**aux organes de travail (31) et/ou aux éléments d'actionnement (32) sont associés des capteurs (25-28, 30, 38) qui, par l'intermédiaire de transpondeurs (55), opèrent un échange de données avec au moins d'un émetteur-récepteur (56) solidaire du châssis, à chaque capteur (25-28, 30, 38) étant associé un transpondeur (55), et une pluralité de transpondeurs (55) communiquant avec le même émetteur-récepteur (56), et l'énergie (X2) nécessaire au fonctionnement de l'agencement capteurs-transpondeurs (25-28, 30, 38, 55) et/ou de l'émetteur-récepteur (56) étant générée au moyen de champs magnétiques externes (65), ou un agencement pendule-bobine d'induction (62, 63) étant prévu pour la production d'énergie (X2) dans le capteur (25-28, 30, 38) et/ou dans le transpondeur (55).

2. Engin agricole comprenant un système de génération et de transmission de données selon une des revendications précédentes, **caractérisé en ce que** les capteurs (25-28, 30, 38) transmettent des signaux de tension (Z) au transpondeur correspondant (55), lequel transforme les signaux de tension (Z) et les transmet en tant que signaux d'information (Y) à au moins un émetteur-récepteur (56), et l'émetteur-récepteur (56) transmet les signaux d'information (Y) à des éléments aval de génération et de transmission de données (40, 41, 43) et des signaux de commande (X) aux capteurs (25-28, 30, 38) et aux transpondeurs (55).

3. Engin agricole (1) comprenant un système de génération et de transmission de données selon la revendication 1, **caractérisé en ce que** le capteur (25-28, 30, 38) et le transpondeur (55) qui lui est associé sont réunis en une unité de capteurs (60).

4. Engin agricole comprenant un système de génération et de transmission de données selon une des revendications précédentes, **caractérisé en ce qu'**une pluralité de capteurs (25-28, 30, 38) et les transpondeurs (55) qui leur sont associés sont réunis en groupes d'éléments de génération et de transmission de données (59), et chaque groupe communique avec un émetteur-récepteur (56) séparé.

5. Engin agricole comprenant un système de génération et de transmission de données selon une des revendications précédentes, **caractérisé en ce que** le ou les émetteurs-récepteurs (56) communiquent avec au moins une unité de commande et d'analyse (41) et/ou avec un système de bus (40) de l'engin agricole (1, 2).

6. Engin agricole comprenant un système de génération et de transmission de données selon une des revendications précédentes, **caractérisé en ce que** l'agencement capteurs-transpondeurs (25-28, 30, 38, 55) est monté mobile et, l'agencement pendule-bobine d'induction (62, 63) destiné à la production d'énergie (X2) est intégré dans l'agencement capteurs-transpondeurs (25-28, 30, 38, 55).

7. Engin agricole comprenant un système de génération et de transmission de données selon la revendication 6, **caractérisé en ce que** le pendule de l'agencement pendule-bobine d'induction (62, 63) est conformé en aimant permanent (63) monté coulissant dans la bobine d'induction (62).

8. Engin agricole comprenant un système de génération et de transmission de données selon une des revendications précédentes, **caractérisé en ce que** le ou les émetteurs-récepteurs (56) sont montés fixes sur le châssis d'engin (57) de l'engin agricole (1, 2), et un ou plusieurs agencements capteurs-transpondeurs (25-28, 30, 38, 55) sont associés à des organes de travail mobiles (31) et/ou à des éléments d'actionnement (32) de l'engin agricole (1, 2).

9. Engin agricole comprenant un système de génération et de transmission de données selon une des revendications précédentes, **caractérisé en ce que** les capteurs (25-28, 30, 38) sont conçus pour générer des signaux de mesure (Z) et/ou des signaux de commande (W).

10. Engin agricole comprenant un système de génération et de transmission de données selon une des revendications précédentes, **caractérisé en ce que** l'engin agricole (1) est conformé en moissonneuse-batteuse (2), et les capteurs (25, 26) sont conçus sous la forme de capteurs de pertes de grain (25, 26) connus en soi et sont associés au secoueur à éléments multiples (8) et/ou au dispositif de nettoyage (15) d'une moissonneuse-batteuse (2).

11. Engin agricole comprenant un système de génération et de transmission de données selon une des revendications précédentes, **caractérisé en ce que** l'engin agricole (1) est conformé en moissonneuse-batteuse (2), et les capteurs (25, 26) sont conçus sous la forme de capteurs de vitesse du vent, de capteurs d'humidité et/ou de capteurs de température, et les capteurs (25, 26) sont associés à au moins un organe de travail (31).

12. Engin agricole comprenant un système de génération et de transmission de données selon une des revendications précédentes, **caractérisé en ce que** les capteurs (38) sont conçus sous la forme de capteur de position (38) pour la commande de réglage (33) des tamis (16, 17) du dispositif de nettoyage (15) d'une moissonneuse-batteuse (2).

13. Engin agricole comprenant un système de génération et de transmission de données selon une des revendications précédentes, **caractérisé en ce que** les capteurs (27) sont conçus sous la forme de capteurs de quantité de grain (27) et sont intégrés dans l'élévateur de grain (23) et/ou dans l'habillage (53) de l'élévateur de grain (23) d'une moissonneuse-batteuse (2).

14. Engin agricole comprenant un système de génération et de transmission de données selon une des revendications précédentes, **caractérisé en ce que** les capteurs (28, 30) sont conçus sous la forme de capteurs de régime (28) et/ou de capteurs de couple (30) et sont associés aux organes de battage (6) d'une moissonneuse-batteuse (2).
